# EUROPÄISCHE PATENTSCHRIFT

(11) **EP 2 743 553 B1**
(45) Veröffentlichungstag und Bekanntmachung des Hinweises auf die Patenterteilung: **04.09.2019**
(21) Anmeldenummer: 13005651.8
(22) Anmeldetag: 05.12.2013
(51) Int. Cl.: F16K 31/04, F16K 31/46, E03B 9/02

(54) **Betätigungsschlüssel mit verformbar ausgebildeter Teilstange**
Actuating key with deformable rod section
Clé d'actionnement avec tige partielle déformable

(30) Priorität: 11.12.2012 DE 102012024124
(43) Veröffentlichungstag der Anmeldung: 18.06.2014
(73) Patentinhaber: KETTLER GMBH, 46286 Dorsten (DE)
(72) Erfinder: Buhla, Michael, 46348 Raesfeld (DE)
(74) Vertreter: Schulte & Schulte

(56) Entgegenhaltungen:
- GB-A- 1 321 773
- GB-A- 2 385 654
- US-A- 342 824
- US-B1- 6 959 914

## Beschreibung

Die Erfindung betrifft einen Schlüssel zum Verstellen von Absperrventilen, Schiebern und ähnlichen Verschlüssen von im Erdreich verlegten Rohrleitungen, mit einem eine aus miteinander verbundenen Teilstangen bestehende Schlüsselstange aufweisenden Gestänge.

Derartige Schlüssel zum Verstellen von Verschlüssen von im Erdreich verlegten Rohrleitungen sind hinlänglich bekannt, etwa aus der US 342,824. Ihr Gestänge weist eine Schlüsselstange auf, deren unteres Ende korrespondierend zu dem jeweiligen Verschluss ausgebildet ist. Die Schlüsselstange kann auch aus einer oder mehreren Teilstangen bestehen, die in der Regel teleskopierbar miteinander verbunden sind. Die GB 1,321,773 zeigt einen Betätigungsschlüssel mit einer Feder, welche zwei separate Teilstangen zusammenhält. Am oberen Ende des Gestänges befindet sich die Querstange mit zwei Griffen an der Außenseite, um den Schlüssel händisch zum Öffnen oder Schließen des Verschlusses in Rotation zu versetzen. Sämtliche Bauteile bisher gebräuchlicher Schlüssel sind aus Stahl hergestellt, insbesondere die Quer- und die ein- oder mehrteilige Schlüsselstange. Dies hat vor allem den Hintergrund, dass entsprechend hohe Kräfte und Momente speziell beim Öffnen des Verschlusses aufgebracht werden müssen, gerade bei solchen, die lange Zeit nicht betätigt worden sind. Bei diesen nur mit hohem körperlichen Einsatz zu öffnenden Verschlüssen kommt es in dem entscheidenden Moment, in dem der Verschluss sich das erste Stückchen öffnet, zu einer enormen schlagartigen Bewegung auf den Benutzer. Dieser stemmt sich mit seiner vollen Kraft gegen das Gestänge, woraufhin sich der Verschluss dann ruckartig öffnet, ohne dass der Bediener auf dieses plötzliche Nachgeben reagieren kann. Es ist daher in der Vergangenheit schon häufiger zu ernsten Verletzungen gekommen. Ein weiterer Nachteil der gebräuchlichen, aus Stahl hergestellten Gestänge liegt in dem hohen Gewicht dieses Materials, was die Handhabung solcher Gestänge zusätzlich schwerer und umständlicher macht.

Damit stellt sich der vorliegenden Erfindung die Aufgabe, einen Schlüssel zum Verstellen von Absperrventilen, Schiebern und ähnlichen Verschlüssen von im Erdreich verlegten Rohrleitungen zu schaffen, der sich durch geringes Gewicht, leichte Handhabung sowie dadurch auszeichnet, dass ein Schlag auf den Bediener bei plötzlichem Öffnen des Verschlusses verhindert wird.

Diese Aufgabe wird dadurch gelöst, dass das Gestänge vollständig oder teilweise aus Kunststoff hergestellt ist und dass zumindest die untere Teilstange um ihre Längsachse elastisch verformbar ausgebildet ist, so dass sich die untere Teilstange bei Bedienung zunächst bei Rotation um die Längsachse gezielt elastisch verformt und beim plötzlichen Öffnen der Armatur in entgegengesetzte Richtung in ihre ursprüngliche Form zurückverformt, und somit den Öffnungsschlag dämpft.

Die Schlüsselstange besteht aus einer T-förmigen Baueinheit aus einer Querstange und einer oberen, vergleichsweise kurzen Teilstange. An diese können sich ein, zwei oder mehr weitere Teilstangen anschließen, die gegebenenfalls teleskopierbar miteinander verbunden sind. Zumindest die untere Teilstange ist dabei um ihre Längsachse elastisch verformbar ausgebildet und/oder gelagert. Diese integrierte Federung gewährleistet ein besonders sanftes und schonendes Öffnen des Verschlusses der Rohrleitung. Die untere, elastisch verformbar ausgebildete und/oder gelagerte Teilstange dämpft in erheblichem Maße die Kräfte ab, die bei der plötzlichen Öffnung des Verschlusses entstehen. Anstatt einer ruck- oder schlagartigen Bewegung, ausgelöst durch den körperlichen Einsatz des Bedieners in dem Moment, in dem sich der Verschluss das erste Stück weit öffnet, entzieht sich die erfindungsgemäße Schlüsselstange dieser Belastung in stark gedämpfter Form, ohne dass dabei die Gefahr von Verletzungen für den Bediener bestünde. Als untere Teilstange ist gegebenenfalls auch eine korrespondierend zu dem Verschluss ausgebildete Kuppelmuffe am unteren Ende der Schlüsselstange anzusehen, welche sich (mit)verformen kann.

Eine bevorzugte Ausführungsform der Erfindung sieht dabei vor, dass die untere Teilstange aus einem eine elastische Verformung begünstigenden Material hergestellt ist, d. h. ein begrenzt federnd ausgebildetes Material sorgt für die angesprochene Wirkung.

Ein Doppeleffekt in Bezug auf das schonende Öffnen der Ventile oder Schieber einerseits und ein geringes Gewicht der Schlüsselstange andererseits ist erreicht, wenn das Gestänge vollständig oder teilweise aus Kunststoff, vorzugsweise aus Karbon hergestellt ist. Speziell Karbon zeichnet sich durch wenig Gewicht und damit eine optimale Handhabung solch einer Schlüsselstange aus, gleichzeitig kann die angesprochene elastische Wirkung bei entsprechender Ausbildung zumindest der unteren Teilstange gut umgesetzt werden.

Es gilt, den Bereich möglichst exakt zu definieren, in dem die Kräfte zwischen mittlerer Teilstange und unterer Teilstange übertragen werden sollen, um vor allem eine gleichmäßige Kraftübertragung zu gewährleisten. Beschädigungen durch hohe punktuelle Belastungen und Verkantungen sollen vermieden werden. Daher empfiehlt es sich, dass zwischen der mittleren Teilstange und der unteren Teilstange ein Absatz vorgesehen ist, in dem beide Teilstangen zumindest annähernd passgenau zueinander ausgebildet und/oder angeordnet sind.

Es hat sich als zweckmäßig erwiesen, wenn dieser Absatz eine Länge von rund 100 mm aufweist und wenn der Absatz am unteren Ende der mittleren Teilstange vorgesehen ist. Im Bereich dieses Absatzes liegen beide Teilstangen möglichst in Nullpassung aneinander an oder geeignete Einbauten gewährleisten den passgenauen Sitz.

Es ist hilfreich, wenn die untere Teilstange ein Innenprofil aufweist. Bei solch einem Innenprofil ist z. B. an ein Polygon, vorzugsweise an ein Quadrat, aber auch jegliche andere geometrische Ausbildung gedacht. Denkbar ist es auch, z. B. über eine Rastverbindung eine auf die Größe des jeweiligen Verschlusses abgestimmte Kuppelmuffe mit der unteren Teilstange zu verbinden. Das Außenprofil der mittleren Teilstange sollte dabei mit dem Innenprofil der unteren Teilstange korrespondieren, die mittlere, vor allem zur Höhenanpassung dienende Teilstange sollte in der unteren verschieblich gelagert sein. Eine umgekehrte Anordnung von mittlerer Teilstange mit darin verschieblicher unterer Teilstange ist ebenso denkbar.

Das Material Karbon zeichnet sich vor allem durch geringes Gewicht aus. Nachteilig ist hingegen, dass sich auch kleine Beschädigungen schnell negativ bemerkbar machen, wenn die Karbonstange etwa gegen Einbauten an der Straßenkappe schlägt, wozu es verstärkt auch kommt, da die Verschlüsse selten zentrisch angebracht sind. Es empfiehlt sich daher, die untere Teilstange mit einem Kantenschutz auszurüsten.

Was diesen Schutz der Schlüsselstange betrifft, ist vorgesehen, dass der Kantenschutz in die untere Teilstange integriert und/oder dass der Kantenschutz im Bereich der Kanten an der unteren Teilstange fixiert ist. Eine erste Variante des Kantenschutzes sieht also vor, die Karbonstange bereits bei der Herstellung im Bereich ihrer Kanten verstärkt auszubilden, also von vorn herein eine Stange mit integriertem Kantenschutz herzustellen. Die zweite Variante umfasst eine Art externen Kantenschutz, d. h. Schutzleisten werden z. B. durch Klebung auf bzw. an den Ecken der Karbonstange fixiert.

Eine dritte Variante sieht vor, dass als Kantenschutz eine Umhüllung dient, die auf die Schlüsselstange, genauer gesagt auf die untere Teilstange aufgesetzt wird. Als Umhüllung ist vor allem an ein Schutzrohr, aber auch an einen Schlauch, insbesondere einen ggf. mit Klebemittel beschichteten Schrumpfschlauch, eine Folie etc. gedacht. Praktikabel sind dabei Ausführungsformen mit einer in Richtung der Längsachse der Schlüsselstange verschieblich oder unverschieblich gelagerten Umhüllung.

Der Einsatz einer solchen Umhüllung empfiehlt sich vor allem in dem unteren Abschnitt der Schlüsselstange, in dem es ansonsten bei der Bedienung speziell an der Straßenkappe leicht zu Beschädigungen kommen kann. Dass die untere Teilstange und/oder eine an der Unterseite der unteren Teilstange positionierte Kuppelmuffe ein Auflager für die bevorzugt als Schutzrohr ausgebildete Umhüllung aufweist, genügt dann als Vorgabe für die Position der Umhüllung, die bei Einsatz der Schlüsselstange nach unten rutscht und auf dem beschriebenen Absatz zum Aufliegen kommt.

Während die zuvor angesprochene Lösung eine Art separates Schutzrohr vorsieht, ist es auch vorstellbar, dass als untere Teilstange ein Rundrohr dient. Dieses Rundrohr weist eine entsprechende Innenkontur auf; die darüber positionierte Teilstange mit korrespondierender Außenkontur ist verschieblich in dem Rundrohr gelagert.

Die Erfindung hat sich als ein Ziel gesetzt, den Schlag zu dämpfen, den ein sich plötzlich dank hoher aufgebrachter Kraft öffnender Verschluss mit sich bringt und der durch eine Federung zumindest teilweise aufgefangen und in seiner Auswirkung reduziert werden soll. In diesem Sinne ist ein weiterer Vorschlag zu verstehen, nach dem zwischen der unteren Teilstange und der oberhalb dieser angeordneten Teilstange zusätzlich ein Drehlager vorgesehen ist. Zweckmäßig ist es, dieses Drehlager direkt unterhalb der oberen Teilstange vorzusehen, die wiederum mit der Querstange gemeinsam eine Baueinheit bildet. Gedacht ist dabei an ein Federbauteil, das in dem Drehlager positioniert ist, um die angesprochenen Ruck- oder Schlagbewegungen, die auf die untere Teilstange ausgeübt werden, aufzufangen bzw. auszugleichen.

Zum Aufbau des Drehlagers ist vorgesehen, dass die beiden Teilstangen zueinander korrespondierende klauenartige Einbauten aufweisen, zwischen denen eine Torsionsfeder aus elastischem Material angeordnet ist. Die Einbauten sorgen für die Drehmomentübertragung zwischen den beiden Teilstangen, die Feder dazwischen für die beabsichtigte Dämpfwirkung.

Schlüssel vollständig oder zumindest teilweise aus Karbon auszubilden, bringt die angesprochenen Vorteile mit sich, vor allem die massive Gewichtsreduzierung. Damit geht jedoch einher, dass dieser Schlüssel im Gegensatz zu den bisher verwendeten Stahlschlüsseln aus einem dunklen und nicht reflektierenden Material hergestellt ist. Bestand also bei den bisherigen Stahlschlüsseln aufgrund deren Reflektionseigenschaften nicht die Gefahr, dass der Führer eines Fahrzeugs im Dunkeln einen unbeaufsichtigten, noch auf dem Verschluss oder einer Einbaugarnitur installierten Schlüssel übersieht und mit diesem kollidiert, ist dies bei einem dunklen Schlüssel und beeinträchtigten Sichtverhältnissen durchaus realistisch. Daher empfiehlt es sich, dass der Schlüssel mit Reflektoren ausgerüstet ist und zwar vor allem im Bereich der Frontflächen der Querstange und im Bereich der Front- und/oder Seitenflächen der Schlüsselstange.

Mehrfach wurde bereits angesprochen, dass ein maßgeblicher Vorteil der erfindungsgemäßen Schlüsselstange in deren geringen Gewicht liegt. Folglich sind auch die Kräfte, die zum Drehen der Schlüsselstange aufgebracht werden müssen, deutlich geringer, als dies bei Schlüsselstangen aus Stahl der Fall war. Vorgeschlagen wird daher eine Vorrichtung, mit der der Bediener das Gestänge mit einem Arm zentrieren und mit dem anderen Arm die Querstange "durchrotieren" lassen kann, um auf diese Weise die Armatur schnell und leichtgängig öffnen oder schließen zu können. Daher ist vorgesehen, dass die Querstange an ihrer Oberseite eine Zentrierbohrung aufweist, die zur Aufnahme einer als Drehhilfe für den Schlüssel vorgesehenen Handhabe dient.

Die Erfindung zeichnet sich insbesondere dadurch aus, dass ein einfach zu handhabender Schlüssel zum Verstellen von Absperrventilen, Schiebern und ähnlichen Verschlüssen von im Erdreich verlegten Rohrleitungen mit integrierter Federung geschaffen ist. Solch ein Schlüssel baut aus Kunststoff, vorzugsweise aus Karbon und ist damit wesentlich leichter als bisher eingesetzte. Vor allem ist solch eine Schlüsselstange als vorteilhaft anzusehen, da ein sanftes Öffnen auch hartnäckig verklemmter Verschlüsse möglich ist. Die starke Ruck- oder Schlagbewegung von Schlüssel auf Bediener beim plötzlichen Öffnen der Armatur wird dank der elastisch verformbaren Ausbildung und Lagerung zumindest der unteren Teilstange vergleichsweise sanft aufgefangen. Die untere Teilstange verformt sich zunächst gezielt, der aufgebrachten Kraft folgend. Kommt es nun zu einem plötzlichen Öffnen und dem damit verbundenen Schlag, verformt sich zumindest die untere Teilstange zunächst in entgegen gesetzter Richtung in ihre ursprüngliche Form zurück, wodurch eine erheblicher Teil der Kräfte aufgefangen wird; die Belastung auf den Bediener verringert sich sehr deutlich, der Schlag wird entscheidend gedämpft.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Schlüssel mit Schutzrohr in Seitenansicht,
- Figur 2: den Schlüssel nach Figur 1 im Querschnitt,
- Figur 3: einen Schlüssel mit Kantenschutz in Seitenansicht,
- Figur 4: den Schlüssel nach Figur 3 im Querschnitt,
- Figur 5: eine Variante zu Figur 3,
- Figur 6: den Schlüssel nach Figur 5 im Querschnitt,
- Figur 7: einen Schlüssel mit Rundrohr,
- Figur 8: den Schlüssel nach Figur 7 im Querschnitt,
- Figur 9: zwei Teilstangen in Seitenansicht,
- Figur 10: ein Detail aus Figur 9,
- Figur 11: den Abschnitt eines Rundrohrs,
- Figur 12: das Rundrohr nach Figur 11 im Querschnitt,
- Figur 13: einen Schlüssel mit Drehlager,
- Figur 14: das Drehlager in vergrößerter Darstellung,
- Figur 15: das Drehlager im Schnitt,
- Figur 16: eine Querstange mit Magnethalterung,
- Figur 17: eine Drehknauf,
- Figur 18: Drehknauf und Querstange und
- Figur 19: einen Querschnitt durch eine Querstange.

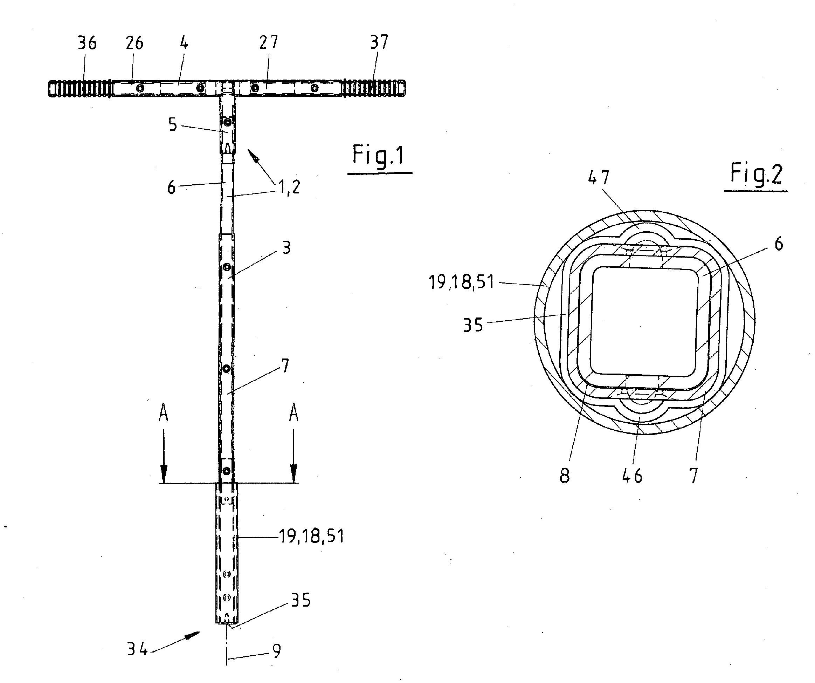

In Figur 1 ist ein Schlüssel 1 in der Variante mit einer Umhüllung 19 dargestellt. Das Gestänge 2 des Schlüssels 1 besteht aus einer Querstange 4, die mit der oberen Teilstange 5 der Schlüsselstange 3 eine gemeinsame Baueinheit bildet. Verbunden ist die obere Teilstange 5 mit der mittleren Teilstange 6 und letztere mit der unteren Teilstange 7, wobei die mittlere Teilstange 6 in der unteren Teilstange 7 zwecke Höhenverstellung des Schlüssels 1 verschieblich gelagert ist. Letztere ist teilweise von einem Kantenschutz 18 umgeben, welcher als Umhüllung 19, hier als Schutzrohr 51 ausgebildet ist. Für diese Umhüllung 19 weist der Schlüssel 1 am unteren Ende 34 der unteren Teilstange 7 ein Auflager 35 auf. Wird der Schlüssel 1 durch Kraft auf die Griffe 36, 37 in entgegen gesetzter Richtung in Rotation um die Längsachse 9 versetzt, nimmt die untere Teilstange 7 einen Teil dieser Kräfte bzw. Momente auf und passt sich diesen durch elastische Verformung an. Da ein vollständig oder weitgehend aus Karbon hergestellter Schlüssel 1 gerade bei schlechten Sichtverhältnissen leicht von Verkehrsteilnehmern übersehen werden kann, empfiehlt sich die Installation von Reflektoren, die in dem Ausführungsbeispiel gemäß Figur 1 mit den Bezugszeichen 26 und 27 bezeichnet sind und die letztlich überall im Bereich von Querstange 4 oder Schlüsselstange 3 angebracht werden könnten.

Nach einem Schnitt gemäß der Linie A-A zeigt Figur 2 den Schlüssel mit dem Blick auf die untere, äußere Teilstange 7 und die darüber positionierte mittlere Teilstange 6. Umgeben ist die untere Teilstange 7 von einem Schutzrohr 51 als Kantenschutz 18. Dabei ist ein Spiel oder ein fester Sitz des Schutzrohrs 51 denkbar. Das Schutzrohr 51 liegt am unteren Ende der Telstange 7 auf dem Auflager 35 auf. Mit den Bezugszeichen 46 und 47 sind Raststifte bezeichnet.

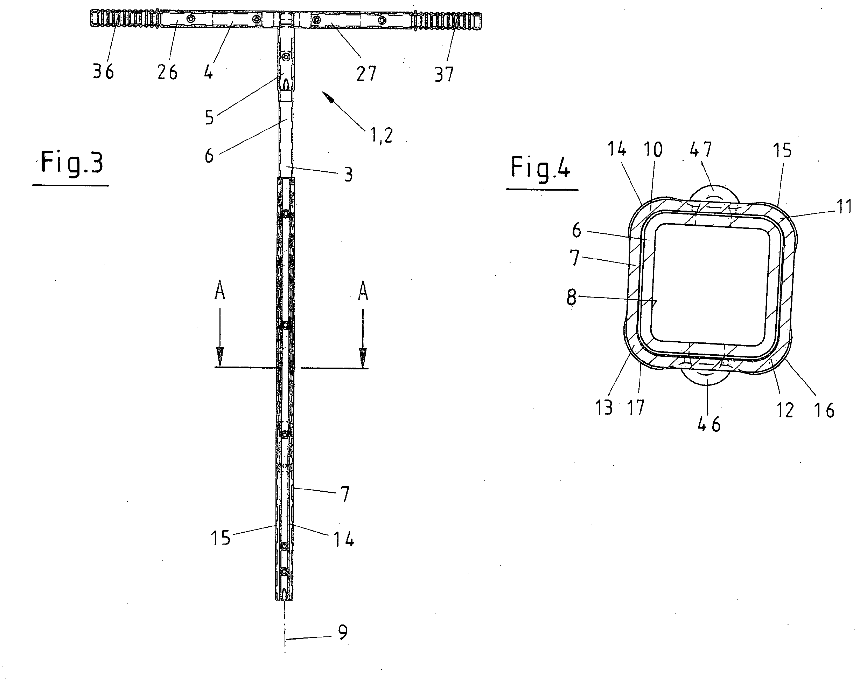

Eine zweite Variante des Kantenschutzes zeigen die Figuren 3 und 4. Dabei ist an den Kanten 10, 11, 12, 13 der Kantenschutz 14, 15, 16, 17 bereits bei der Herstellung integriert, d. h. zum Beispiel einlaminiert worden.

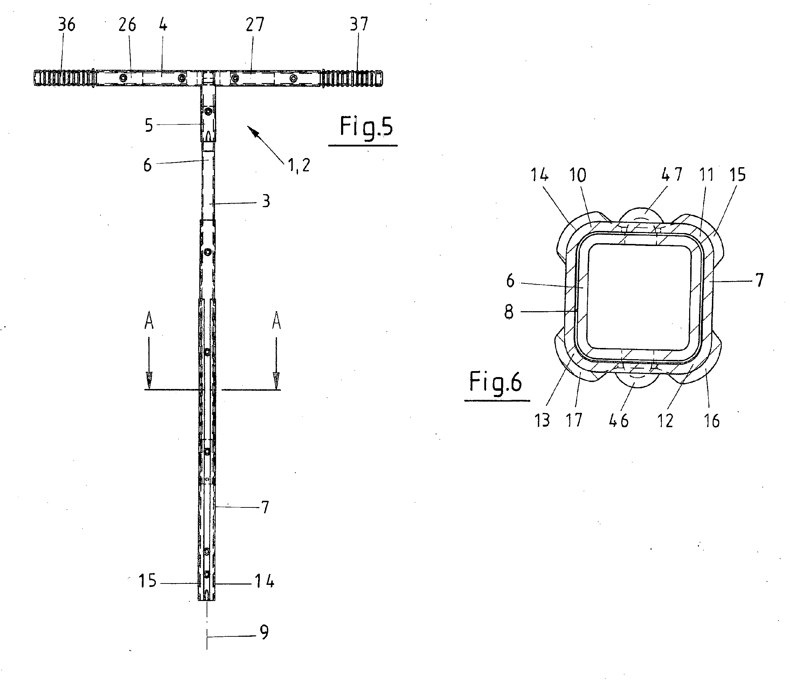

Eine dritte Variante zeigen dann die Figuren 5 und 6 in Form eines extern fixierten Kantenschutzes 14, 15. Besser erkennbar ist dies in Figur 6, einem Schnitt nach der Linie A-A aus Figur 5. An den vier Kanten 10, 11, 12, 13 findet sich der z. B. aufgeklebte Kantenschutz 14, 15, 16, 17.

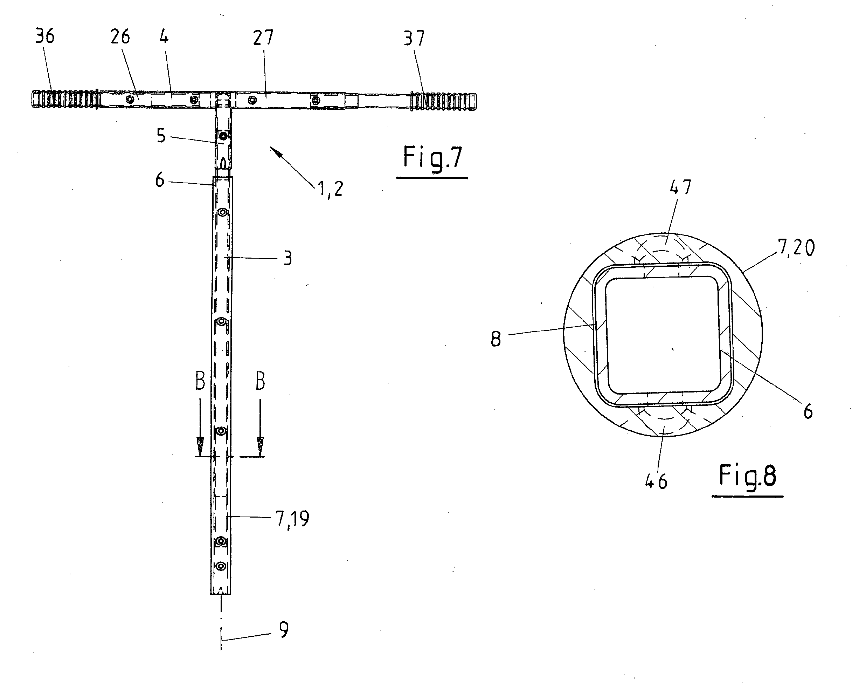

Schließlich zeigen die Figuren 7 und 8 eine als Rundrohr 20 ausgebildet untere Teilstange 7. Da im Gegensatz zu den Ausführungsbeispielen der Figuren 1, 2 und 3, 4 sowie 5, 6 die mittlere Teilstange 6 und die untere Teilstange 7 nicht dieselbe geometrische Form aufweisen, muss das Innenprofil 8 des Rundrohrs 20 mit der äußeren Form der mittleren Teilstange 6 korrespondieren. Angedeutet sind außerdem mit den Bezugszeichen 46 und 47 die beiden Raststifte.

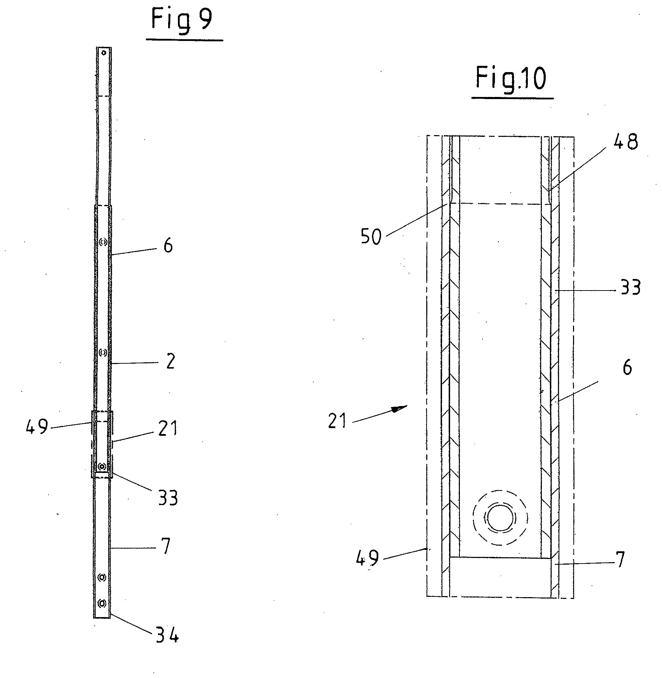

In den Figuren 9 und 10 gezeigt ist ein Gestänge 2, das eine mittlere Teilstange 6 und eine untere Teilstange 7 aufweist. Im Übergang zwischen beiden Teilstangen 6, 7 befindet sich der Absatz 21 am unteren Ende 33 der mittleren Teilstange 6, symbolisiert zur Veranschaulichung durch das Rechteck 49. Der Absatz 21 ist insofern nach unten und außerdem nach oben begrenzt, als oberhalb des oberen Endes 50 des Absatzes 21 dann wieder ein geringer Abstand 48 zwischen den beiden Teilstangen 6, 7 vorgesehen ist.

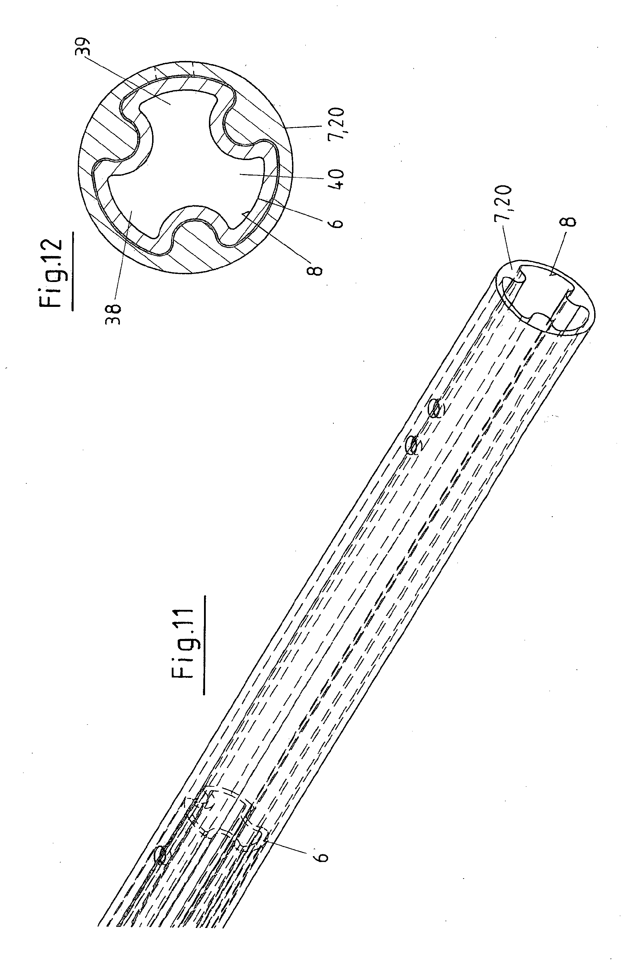

Eine Variante zu Figur 7 und 8 zeigen dann die Figuren 11 und 12 in einer Art Sonderprofil. Die als Rundrohr 20 ausgebildete untere Teilstange 7 weist ein Innenprofil 8 mit Ausbuchtungen auf, wobei auch hier die beiden Teilstangen 6 und 7, was ihre Formgebung betrifft, miteinander korrespondieren.

Dargestellt ist dieser Zusammenhang dann auch in Figur 12 mit den drei Ausbuchtungen 38, 39, 40 in der mittleren Teilstange 6 wie dem Rundrohr 20.

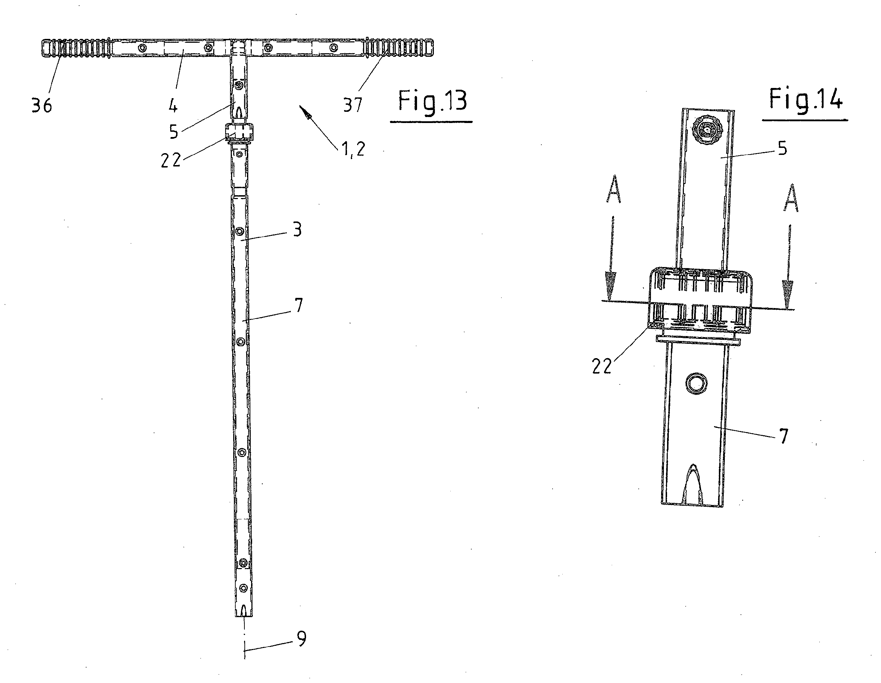

Eine zusätzliche Art der Verformbarkeit zeigen die Figuren 13, 14 und 15 mit einer unteren Teilstange 7, die insbesondere verformbar gelagert ist, d. h. für die federnde Wirkung sorgt zusätzlich ein oberhalb der unteren Teilstange 7 positioniertes Drehlager 22. Zunächst zeigt Figur 13 den kompletten Schlüssel 1 mit der Baueinheit aus Querstange 4 und oberer Teilstange 5, an die sich dann unmittelbar das Drehlager 22 anschließt, das seinerseits die Verbindung zwischen der oberen Teilstange und der einzigen weiteren Teilstange 7 bildet.

Eine vergrößerte Darstellung gemäß Figur 14 zeigt diesen Anschluss zwischen der oberen Teilstange 5 und der unteren Teilstange 7 im Bereich des Drehlagers 22, das eine relative Bewegung zwischen den beiden Teilstangen 5 und 7 zulässt.

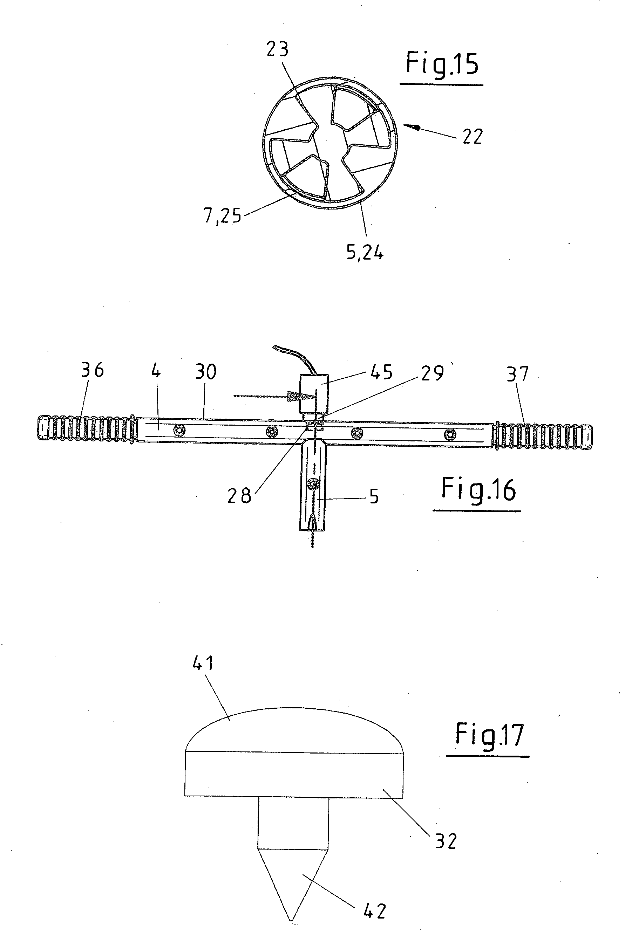

Verantwortlich hierfür ist die Ausbildung des Drehlagers 22, dargestellt in Figur 15. In dem Drehlager 22 befinden sich klauenartige Einbauten 24, 25 seitens beider Teilstangen 5, 7. Getrennt sind diese durch eine Torsionsfeder 23 als sich bei entsprechender Belastung verformendes Bauteil bzw. einer Art Dämpfung bei der Übertragung der Drehmomente, sprich vor allem beim ruck- bzw. schlagartigen Öffnen des Verschlusses.

In Figur 16 ist die Baueinheit aus Querstange 4 und oberer Teilstange 5 veranschaulicht. Weil ein Schallempfänger dort angebracht werden können soll, der Kunststoff jedoch die notwendige magnetische Wirkung natürlich nicht mit sich bringt, ist an in die Querstange integrierte Metallplatte 28 gedacht, um die Fixierung mit dem Sensor 45 bzw dem diesem zugeordneten Magneten 29 an der Oberseite 30 der Querstange 4 zu gewährleisten.

Figur 17 zeigt einen als Handhabe ausgebildeten Drehknauf 32 mit einem Griff 41 und einem unterseitigen Dorn 42.

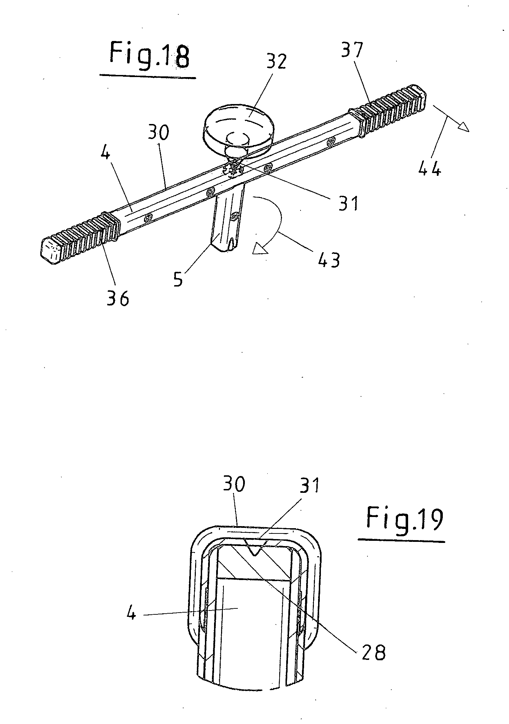

Was mit diesem Drehknauf bezweckt werden soll, stellt Figur 18 dar. Der Drehknauf 32 wird in eine Zentrierbohrung 31 an der Oberseite 30 der Querstange eingesetzt. Wird der Schlüssel nun durch Betätigung der Griffe 36, 37, symbolisiert durch den Pfeil 44, in die durch den Pfeil 43 veranschaulichte Rotation versetzt, muss der komplette Schlüssel 1 nur im Bereich des Drehknaufes 32 gehalten werden. Dank seines enorm geringen Gewichts kann der Schlüssel damit besonders schnell speziell bei leichtgängigen Armaturen rotieren, der Bediener muss hierzu nur die Handhabe 32 festhalten und den Schlüssel 1 gelegentlich anstoßen.

Figur 19 zeigt einen Schnitt durch die Querstange 4, wobei besonderes Augenmerk auf der Zentrierbohrung 31 an der Oberseite 30 der Querstange 4 sowie auf den in die Querstange 4 integrierten Metallplatte 28 gerichtet ist.

## Patentansprüche

1. Schlüssel (1) zum Verstellen von Absperrventilen, Schiebern und ähnlichen Verschlüssen von im Erdreich verlegten Rohrleitungen, mit einem eine aus miteinander verbundenen Teilstangen (5, 6, 7) bestehende Schlüsselstange (3) aufweisenden Gestänge (2),
**dadurch gekennzeichnet,**
**dass** das Gestänge (2) vollständig oder teilweise aus Kunststoff hergestellt ist und dass zumindest die untere Teilstange (7) um ihre Längsachse (9) elastisch verformbar ausgebildet ist, so dass sich die untere Teilstange (7) bei Bedienung zunächst bei Rotation um die Längsachse (9) gezielt elastisch verformt und beim plötzlichen Öffnen des Verschlusses in entgegengesetzter Richtung in ihre ursprüngliche Form zurückverformt und somit den Öffnungsschlag dämpft.

2. Schlüssel nach Anspruch 1,
**dadurch gekennzeichnet,**
**dass** die untere Teilstange (7) aus einem eine Federwirkung begünstigenden Material hergestellt ist.

3. Schlüssel nach Anspruch 2,
**dadurch gekennzeichnet,**
**dass** das Gestänge (2) vollständig oder teilweise aus Karbon hergestellt ist.

4. Schlüssel nach Anspruch 1,
**dadurch gekennzeichnet,**
**dass** zwischen einer mittleren Teilstange (6) und der unteren Teilstange (7) ein Absatz (21) vorgesehen ist, in dem beide Teilstangen (6, 7) zumindest annähernd passgenau zueinander ausgebildet und/oder angeordnet sind.

5. Schlüssel nach Anspruch 4,
**dadurch gekennzeichnet,**
**dass** der Absatz (21) am unteren Ende (33) der mittleren Teilstange (6) vorgesehen ist.

6. Schlüssel nach Anspruch 1,
**dadurch gekennzeichnet,**
**dass** die untere Teilstange (7) ein Innenprofil (8) aufweist.

7. Schlüssel nach Anspruch 1,
**dadurch gekennzeichnet,**
**dass** die untere Teilstange (7) mit einem Kantenschutz (14-18) ausgerüstet ist.

8. Schlüssel nach Anspruch 7,
**dadurch gekennzeichnet,**
**dass** der Kantenschutz in die untere Teilstange (7) integriert und/oder dass der Kantenschutz (14-17) im Bereich der Kanten (10-13) an der unteren Teilstange (7) fixiert ist.

9. Schlüssel nach Anspruch 7,
**dadurch gekennzeichnet,**
**dass** als Kantenschutz (18) eine Umhüllung (19) dient.

10. Schlüssel nach Anspruch 9,
**dadurch gekennzeichnet,**
**dass** die untere Teilstange (7) und/oder eine an der Unterseite (34) der unteren Teilstange (7) positionierte Kuppelmuffe ein Auflager (35) für die Umhüllung (19) aufweist.

11. Schlüssel nach Anspruch 1,
**dadurch gekennzeichnet,**
**dass** als untere Teilstange (7) ein Rundrohr (20) dient.

12. Schlüssel nach Anspruch 1,
**dadurch gekennzeichnet,**
**dass** zwischen der unteren Teilstange (7) und der oberhalb dieser angeordneten Teilstange (5) ein Drehlager (22) vorgesehen ist.

13. Schlüssel nach Anspruch 12,
**dadurch gekennzeichnet,**
**dass** die beiden Teilstangen (5, 7) zueinander korrespondierende Einbauten (24, 25) aufweisen, zwischen denen eine Torsionsfeder (23) aus elastischem Material angeordnet ist.

14. Schlüssel nach Anspruch 1,
**dadurch gekennzeichnet,**
**dass** der Schlüssel (1) mit Reflektoren (26, 27) ausgerüstet ist.

15. Schlüssel nach Anspruch 1,
**dadurch gekennzeichnet,**
**dass** eine Querstange (4) der Schlüsselstange (3) an ihrer Oberseite (30) eine Zentrierbohrung (31) aufweist, die zur Aufnahme einer als Drehhilfe für den Schlüssel (1) vorgesehenen Handhabe (32) dient.

## Claims

1. Key (1) for adjusting stop valves, gate valves and similar closures of pipes laid in the earth having a rod assembly (2) with a key rod (3) consisting of connected rod sections (5, 6, 7),
**characterised in that**
the rod assembly (2) is manufactured wholly or partly from plastic and that at least the lower rod section (7) is designed to be flexible around its longitudinal axis (9), so that when operated the lower rod section (7) is initially deliberately flexible on rotation around the longitudinal axis (9) and when the closure is suddenly opened returns in the opposite direction to its original shape and thus attenuates the opening impact.

2. Key in accordance with Claim 1,
**characterised in that**
the lower rod section (7) is made from of a material that supports a spring effect.

3. Key in accordance with Claim 2,
**characterised in that**
the rod assembly (2) is made wholly or partly from carbon.

4. Key in accordance with Claim 1,
**characterised in that**
a recess (21) is provided between a middle rod section (6) and the lower rod section (7) in which both rod sections (6, 7) are designed and/or arranged at least approximately precisely to one another.

5. Key in accordance with Claim 4,
**characterised in that**
the recess (21) is provided at the lower end (33) of the middle rod section (6).

6. Key in accordance with Claim 1,
**characterised in that**
the lower rod section (7) has an inner profile (8).

7. Key in accordance with Claim 1,
**characterised in that**
the lower rod section (7) is fitted with an edge protector (14-18).

8. Key in accordance with Claim 7,
**characterised in that**
the edge protector is integrated into the lower rod section (7) and/or that the edge protector (14-17) is fixed in the area of the edges (10-13) on the lower rod section (7).

9. Key in accordance with Claim 7,
**characterised in that**
a sheath (19) serves as edge protector (18).

10. Key in accordance with Claim 9,
**characterised in that**
the lower rod section (7) and/or a coupling socket positioned on the underside (34) of the lower rod section (7) has a support (35) for the sheath (19).

11. Key in accordance with Claim 1,
**characterised in that**
a round tube (20) serves as the lower rod section (7).

12. Key in accordance with Claim 1,
**characterised in that**
a pivot bearing (22) is provided between the lower rod section (7) and the rod section (5) arranged above this.

13. Key in accordance with Claim 12,
**characterised in that**
the two rod sections (5, 7) have fittings (24, 25) corresponding to one another between which a torsion spring (23) made from elastic material is arranged.

14. Key in accordance with Claim 1,
**characterised in that**
the key (1) is fitted with reflectors (26, 27).

15. Key in accordance with Claim 1,
**characterised in that**
a crossbar (4) of the key rod (3) has a centre hole (31) on its upper side (30) that serves to receive a handle (32) provided as a turning aid for the key (1).

## Revendications

1. Clé (1) destiné à changer le réglage de vannes d'arrêt, tiroirs et autres fermetures de conduites de tuyauterie posées en terre, avec une tringle (2) présentant une tige de clé (3) consistant en tiges partielles (5, 6, 7) reliées les unes aux autres,
**caractérisé par le fait**
**que** la tringle (2) est complètement ou partiellement fabriquée en plastique et qu'au moins la tige partielle inférieure (7) est formée de façon à pouvoir être déformée élastiquement autour de son axe longitudinal (9) de façon à ce que la tige partielle inférieure (7), au moment de l'utilisation, se déforme de façon ciblée dans un premier temps lors de la rotation autour de l'axe longitudinal (9) avant de reprendre sa forme d'origine lors de l'ouverture soudaine de la fermeture dans le sens opposé en amortissant ainsi le choc de l'ouverture.

2. Clé selon la revendication 1,
**caractérisé par le fait**
**que** la tige partielle inférieure (7) est fabriquée dans un matériau favorisant un effet élastique.

3. Clé selon la revendication 2,
**caractérisé par le fait**
**que** la tringle (2) est réalisée complètement ou partiellement en carbone.

4. Clé selon la revendication 1,
**caractérisé par le fait**
**qu'**une déposition (21) est prévue entre une tige partielle médiane (6) et la tige partielle inférieure (7), dans laquelle les deux tiges partielles (6, 7) sont formées et/ou disposées de manière à être à peu près ajustées l'une par rapport à l'autre.

5. Clé selon la revendication 4,
**caractérisé par le fait**
**que** cette déposition (21) est prévue à l'extrémité inférieure (33) de la tige partielle médiane (6).

6. Clé selon la revendication 1,
**caractérisé par le fait**
**que** la tige partielle inférieure (7) présente un profil intérieur (8).

7. Clé selon la revendication 1,
**caractérisé par le fait**
**que** la tige partielle inférieure (7) est équipée d'une protection de bord (14-18).

8. Clé selon la revendication 7,
**caractérisé par le fait**
**que** la protection de bord est intégrée dans la tige partielle inférieure (7) et/ou que la protection de bord (14-17) est fixée dans la zone des bords (10-13) sur la tige partielle inférieure (7).

9. Clé selon la revendication 7,
**caractérisé par le fait**
**qu'**une enveloppe (19) sert de protection de bord (18).

10. Clé selon la revendication 9,
**caractérisé par le fait**
**que** la tige partielle inférieure (7) et/ou un manchon d'accouplement positionné sur la face inférieure (34) de la tige partielle inférieure (7) présente un support (35) pour l'enveloppe (19).

11. Clé selon la revendication 1,
**caractérisé par le fait**
**qu'**un tuyau rond (20) sert de tige partielle inférieure (7).

12. Clé selon la revendication 1,
**caractérisé par le fait**
**qu'**un palier pivotant (22) est prévu entre la tige partielle inférieure (7) et la tige partielle disposée au-dessus de cette dernière (5).

13. Clé selon la revendication 12,
**caractérisé par le fait**
**que** les deux tiges partielles (5, 7) présentent des pièces incorporées (24, 25) correspondant les unes aux autres, entre lesquelles est disposé un ressort de torsion (23) en matériau élastique.

14. Clé selon la revendication 1,
**caractérisé par le fait**
**que** la clé (1) est équipée de réflecteurs (26, 27).

15. Clé selon la revendication 1,
**caractérisé par le fait**
**qu'**une tige transversale (4) de la tige de clé (3) sur la face supérieure (30) présente un perçage de centrage (31) qui sert de réception d'une poignée (32) prévue en tant qu'aide à la torsion de la clé (1).
